Europäisches Patentamt

European Patent Office

Office européen des brevets

(11) Veröffentlichungsnummer: **0 234 199**
**B1**

(19)

(12) # EUROPÄISCHE PATENTSCHRIFT

(45) Veröffentlichungstag der Patentschrift:
11.04.90

(51) Int. Cl.⁴: **C01G 56/00, G21C 19/46**

(21) Anmeldenummer: 87100198.8

(22) Anmeldetag: 09.01.87

(54) Verfahren zum Gewinnen einer Lösung von schwer löslichem Kernbrennstoff, insbesondere von Plutoniumoxid oder Uran/Plutonium-Mischoxid.

(30) Priorität: 22.01.86 DE 3601826

(43) Veröffentlichungstag der Anmeldung:
02.09.87 Patentblatt 87/36

(45) Bekanntmachung des Hinweises auf die Patenterteilung:
11.04.90 Patentblatt 90/15

(84) Benannte Vertragsstaaten:
DE FR GB

(56) Entgegenhaltungen:
EP-A- 0 049 827
US-A- 3 034 868
US-A- 3 794 470

(73) Patentinhaber: Siemens Aktiengesellschaft,
Wittelsbacherplatz 2, D-8000 München 2(DE)

(72) Erfinder: Steinhauser, Michael, Dipl.Chem.,
Georg-Koch-Strasse 10, D-8031 Eichenau(DE)
Erfinder: Hoffmann, Günter, Dr.Dipl.-Chem.,
Ackerstrasse 9, D-8000 München 90(DE)
Erfinder: Weigel, Fritz, Prof.Dr., Germaniastrasse 14,
D-8000 München 40(DE)
Erfinder: Wittmann, Kurt, Dr.Dipl.-Chem.,
Vogelsbergstrasse 38, D-6455 Erlensee(DE)
Erfinder: Schäfer, Dieter, Dipl.-Ing., Eichenweg 4,
D-8751 Leidersbach(DE)

## Beschreibung

Die Erfindung betrifft ein Verfahren zum Gewinnen einer Lösung von schwer löslichem Kernbrennstoff, insbesondere von $PuO_2$ oder $(U/Pu)O_2$ -Mischoxid in Salpetersäure innerhalb eines gasdicht verschlossenen Gefäßes (Autoklaven).

Ein derartiges Verfahren ist aus der europäischen Patentschrift 00 49 827 bekannt. Nach diesem Verfahren wird eine Suspension aus $PuO_2$ oder $(U/Pu)O_2$-Mischoxid in konzentrierter Salpetersäure im Autoklaven erhitzt. Hierbei wird die Salpetersäure zusammen mit dem Kernbrennstoff im gasdicht verschlossenen Autoklaven umgerührt und durchmischt. Die Temperatur des Kernbrennstoffes und der Salpetersäure im Autoklaven ist günstigerweise gleich wie oder höher als die Siedetemperatur von Salpetersäure bei Normaldruck (Atmosphährendruck).

Mit diesem Verfahren konnten z.B. 4 g $PuO_2$ in 30 ml konzentrierter Salpetersäure bei ca. 220°C nach etwa 20 Std. gelöst werden. Dabei ergab sich eine Endkonzentration von 130 g Plutonium pro Liter Lösung.

Wesentlich höhere Plutoniumgehalte in der Lösung sind mit dem bekannten Verfahren nicht zu erzielen, da die Lösegeschwindigkeit bei größerer Plutoniumkonzentration in der Lösung gegen Null geht.

Der Erfindung liegt die Aufgabe zugrunde, das bekannte Verfahren weiterzuentwickeln und höhere Kernbrennstoffkonzentrationen in der salpetersauren Lösung zu erzielen.

Zur Lösung dieser Aufgabe ist ein Verfahren der eingangs erwähnten Art erfindungsgemäß dadurch gekennzeichnet, daß die Salpetersäure im Gefäß verdampft und kondensiert und der Kernbrennstoff außerhalb der Lösung vom frischen Salpetersäurekondensat überrieselt wird.

Auf diese Weise steht zum Auflösen des Kernbrennstoffes immer kernbrennstofffreie Salpetersäure zur Verfügung, in der die Lösegeschwindigkeit für den Kernbrennstoff ihren größten Wert hat. Deshalb gelingt es sogar, Konzentrationen von schwerlöslichem Kernbrennstoff in Salpetersäure zu erzielen, die der maximalen Löslichkeit des Kernbrennstoffes in Salpetersäure bei Normalbedingungen (Umgebungstemperatur und Atmosphärendruck) entspricht.

Besonders günstig für die Bereitstellung von kernbrennstofffreier Salpetersäure ist es, wenn der Kernbrennstoff ohne Aufschwemmen überrieselt wird.

Von Vorteil ist es ferner, wenn ein gasdicht verschlossenes Gefäß verwendet wird, in dem sich der Kernbrennstoff auf einem porösen Träger unterhalb eines gekühlten Körpers befindet, an dem verdampfte Salpetersäure kondensiert.

In einem solchen Gefäß kann ein Salpetersäurekreislauf mit einfachen Mitteln aufrechterhalten werden.

Die Erfindung und ihre Vorteile seien anhand der Zeichnung an einem Ausführungsbeispiel näher erläutert:

Fig. 1 zeigt im Längsschnitt stark schematisch dargestellt einen Autoklaven für ein Verfahren gemäß der Erfindung.

Fig. 2 zeigt in einem Diagramm dargestellte Auflösungsraten.

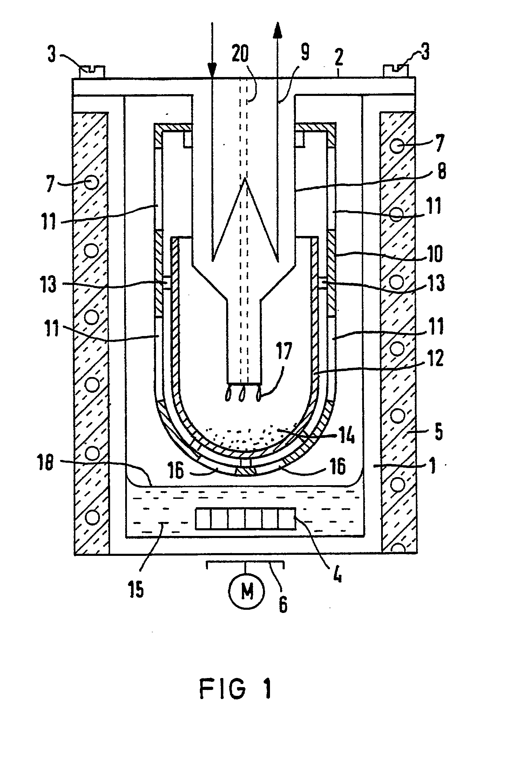

Der in Fig. 1 dargestellte Autoklav 1 ist mit einem Deckel 2 mit Hilfe von Schrauben 3 gasdicht verschlossen. Der Autoklav 1 weist außen einen Keramikmantel 5 auf, in dem elektrische Heizspiralen 7 verlegt sind, mit denen der Autoklav 1 aufgeheizt wird. Innen am Boden des Autoklaven 1 befindet sich ein Rührer 4, dem auf der Außenseite des Bodens ein Elektromagnet 6 zugeordnet ist, der den Rührer 4 über eine Magnetkupplung antreibt.

Der Autoklav 1 und der Deckel 2 bestehen aus Edelstahl. Ihre Innenseiten sind mit einem nicht dargestellten Überzug aus Polytetrafluoräthylen versehen, das salpetersäurebeständig ist. Auf der Innenseite des Deckels 2 ist ferner ein Kühlfinger 8 aus Edelstahl ausgebildet, der auch einen nicht dargestellten Überzug aus Polytetrafluoräthylen aufweist. In diesem Kühlfinger 8 ist ein Rohr 9 verlegt, durch das ein Kühlmittel, z.B. Wasser, fließen kann.

Am Kühlfinger 8 hängt außen ein Korb 10 aus Polytetrafluoräthylen, der am Mantel Schlitze 11 und am Boden Schlitze 16 aufweist. Innen in diesem Korb 10 ist ein oben offener Becher 12 aus Glasfaserfilz mit Abstand von der Innenseite des Korbes 10 angeordnet. Dieser Abstand ist durch Abstandskörper 13 aus Polytetrafluoräthylen zwischen dem Becher 12 und dem Korb 10 gewährleistet.

Der Kühlfinger 8 ragt mit einem sich verjüngenden Ende in den Becher 12 hinein. Am Boden des Bechers 12 ist innen z.B. aus $PuO_2$ bestehendes Kernbrennstoffpulver 14 angeordnet, für das der Becher 12 als poröser Träger dient.

Innen am Boden ist der Autoklav 1 mit konzentrierter Salpetersäure 15 gefüllt, deren Spiegel 18 Abstand vom Korb 10 hat. Diese Salpetersäure 15 wird vom Rührer 4 umgerührt. Die Salpetersäure 15 ist günstigerweise fluoridfrei, so daß bei der Weiterverarbeitung der Lösung Verarbeitungsanlagen nicht durch Korrosion belastet und chemische Nachfolgeprozesse nicht behindert werden.

Beim Aufheizen des Autoklavens 1 mit den elektrischen Heizspiralen 7 verdampft ständig Salpetersäure 15 und gelangt in Dampfform durch die Schlitze 11 und 16 in das Innere des Korbes 10, wo die Salpetersäure außen am Kühlfinger 8 kondensiert. Vom Kühlfinger 8 fallen ständig Tropfen 17, die aus frischem Salpetersäurekondensat bestehen, in denen kein $PuO_2$ gelöst ist, auf das $PuO_2$-Pulver 14, das sich oberhalb des Spiegels 18 der Salpetersäure 15 und damit außerhalb der die Lösung darstellenden Salpetersäure 15 auf dem Boden des Bechers 12 befindet. Dieses $PuO_2$-Pulver 14 wird also ständig von frischem Salpetersäurekondensat über- und durchrieselt, ohne daß das $PuO_2$-Pulver 14 aufgeschwemmt wird. Das Salpetersäurekondensat löst hierbei $PuO_2$ auf, die flüssige Lösung durchdringt die Wand des Bechers 12 und tropft durch die Schlitze 16 am Boden des Korbes 10 wieder in die Salpetersäure 15 auf dem Boden des Autoklavens 1 zurück. Durch genügend langes Aufrechterhalten dieses Salpetersäurekreislaufes wird schließlich

das gesamte PuO$_2$ 14 am Boden des Bechers 12 in der Salpetersäure 15 aufgelöst.

Günstigerweise wird der Autoklav 1 so beheizt, daß die Tropfen 17 aus frischem Salpetersäurekonzentrat eine Temperatur im Bereich von 150°C bis 250°C haben. Innerhalb des Autoklaves herrscht dann ein entsprechender Überdruck.

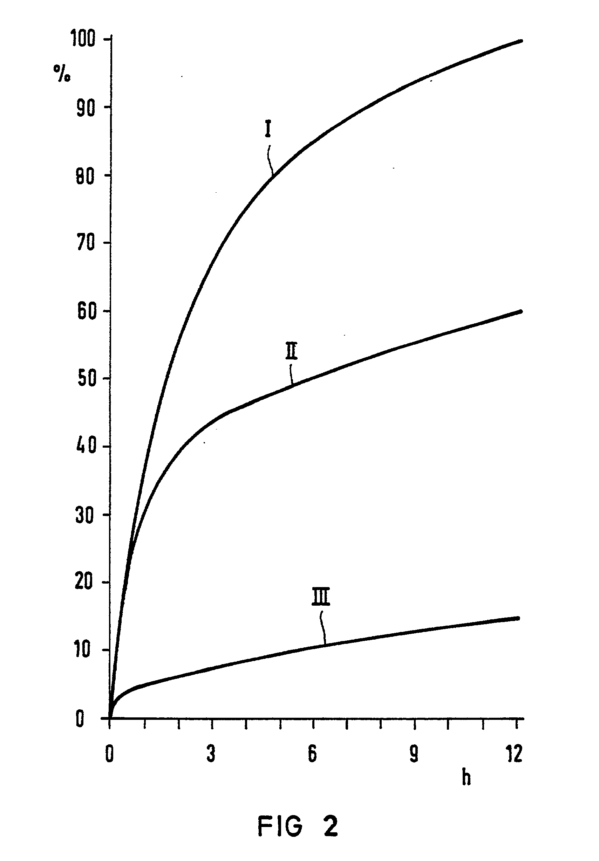

Im Diagramm nach Fig. 2 sind gelöste PuO$_2$-Mengen in Gewichtsprozent über einer Lösezeit in Stunden aufgetragen.

Die Kurve I in Fig. 2 wurde mit einem gasdicht verschlossenen Autoklaven 1 entsprechend Fig. 1 an einem erfindungsgemäßen Verfahren gemessen, bei dem 5 g pulverförmiges PuO$_2$ auf dem Boden des Bechers 12 bei einer Temperatur der Tropfen 17 aus Salpetersäurekondensat von 220°C in 20 Milliliter konzentrierter Salpetersäure 15 aufgelöst wurde. Nach 12 Stunden war das gesamte PuO$_2$ aufgelöst, und es ergab sich eine Endkonzentration vom 250 g Plutonium pro Liter Lösung.

Zum Vergleich wurde die gleiche Menge des gleichen pulverförmigen PuO$_2$ mit der gleichen Menge konzentrierter Salpetersäure gemischt und die Suspension im gasdicht verschlossenen Autoklaven auf 220°C erhitzt. Die Auflösungsrate ist durch die Kurve II in Fig. 2 dargestellt, die zeigt, daß sich nach 12 Stunden nur eine Lösungskonzentration von 130 g Plutonium pro Liter Lösung ergeben hat, die auch nach einer längeren Lösezeit nicht mehr anstieg.

Schließlich wurde noch die gleiche Menge des gleichen pulverförmigen PuO$_2$ auf dem Boden des Bechers 12 und die gleiche Menge konzentrierter Salpetersäure 15 in einem Autoklaven 1 entsprechend Fig. 1 behandelt. Der Deckel 2 verschloß den Autoklaven 1 zwar gasdicht, durch den Kühlfinger 8 war aber ein dünner, in Fig. 1 gestrichelt dargestellter Druckausgleichskanal 20 nach außen geführt, so daß im Autoklaven 1 stets Atmosphärendruck herrschte. Die konzentrierte Salpetersäure 15 am Boden des Autoklaven 1 konnte deshalb nur auf Siedetemperatur bei Normaldruck (etwa auf 120°C) aufgeheizt werden, und die auf das PuO$_2$-Pulver fallenden Tropfen 17 aus frischem Salpetersäurekondensat hatten dementsprechend nur eine Temperatur unterhalb dieser Siedetemperatur.

Die sich ergebende Lösungsrate stellt die Kurve III in Fig. 2 dar. Nach 12 Stunden betrug die Plutoniumkonzentration in der Lösung nur ca. 15 g pro Liter. Diese Lösungskonzentration konnte auch durch eine längere Lösezeit nicht erhöht werden.

Es zeigte sich, daß die durch das erfindungsgemäße Verfahren entsprechend der Kurve I in Fig. 2 erzielte Lösungsrate sogar erheblich größer ist als die Summe der Lösungsraten entsprechend den Kurven II und III.

## Patentansprüche

1. Verfahren zum Gewinnen einer Lösung von schwer löslichem Kernbrennstoff, insbesondere von PuO$_2$ oder (U/PuO$_2$)-Mischoxid, in Salpetersäure innerhalb eines gasdicht verschlossenen Gefäßes (Autoklaven), dadurch gekennzeichnet, daß die Salpetersäure (15) im Gefäß (1) verdampft und kondensiert und der Kernbrennstoff (14) außerhalb der Lösung vom frischen Salpetersäurekondensat (17) überrieselt wird.

2. Verfahren nach Anspruch 1, dadurch gekennzeichnet, daß der Kernbrennstoff (14) ohne Aufschwemmen überrieselt wird.

3. Verfahren nach Anspruch 1, dadurch gekennzeichnet, daß die Temperatur des frischen Salpetersäurekondensates (17) auf einen Wert im Bereich von 150°C bis 250°C eingestellt wird.

4. Verfahren nach einem der Ansprüche 1 bis 3, dadurch gekennzeichnet, daß ein gasdicht verschlossenes Gefäß (1) verwendet wird, in dem sich der Kernbrennstoff (14) auf einem porösen Träger (12) unterhalb eines gekühlten Körpers (8) befindet, an dem die verdampfte Salpetersäure kondensiert.

## Claims

1. Process for obtaining a solution of almost non-soluble nuclear fuel, particularly of PuO$_2$ or (U/PuO$_2$) mixed oxide, in nitric acid within a gastight sealed receptacle (autoclave), characterised in that the nitric acid (15) vaporises in the receptacle (1) and condenses and the nuclear fuel (14) is trickled over outside by the solution of fresh nitric acid condensate (17).

2. Method according to claim 1, characterised in that the nuclear fuel (14) is trickled over without deposit.

3. Method according to claim 1, characterised in that the temperature of fresh nitric acid condensate (17) is set to a value in the region of 150°C to 250°C.

4. Method according to one of claims 1 to 3, characterised in that a gas-tight sealed receptacle (1) is used in which the nuclear fuel (14) is located on a porous carrier (12) below a cooled body (8), on which the vaporized nitric acid condenses.

## Revendications

1. Procédé d'obtention d'une solution nitrique de combustible nucléaire peu soluble, notamment de PuO$_2$ ou d'un oxyde mixte de UO$_2$ et de PuO$_2$, dans un récipient fermé d'une manière étanche au gaz (autoclave), caractérisé en ce qu'il consiste à évaporer et à condenser l'acide nitrique (15) dans le récipient (1) et à arroser le combustible nucléaire (14) à l'extérieur de la solution par de l'acide nitrique condensé frais (17).

2. Procédé suivant la revendication 1, caractérisé en ce qu'il consiste à arroser le combustible nucléaire (14) sans mise en suspension.

3. Procédé suivant la revendication 1, caractérisé en ce qu'il consiste à régler la température de l'acide nitrique concentré frais (17) entre 150°C et 250°C.

4. Procédé suivant l'une des revendications 1 à 3, caractérisé en ce qu'il consiste à utiliser un récipient (1) qui est fermé d'une manière étanche au gaz, et dans lequel le combustible nucléaire (14) se trouve, sur un support (12) poreux, en-dessous d'un corps (8) refroidi sur lequel se condense l'acide nitrique évaporé.

FIG 1

FIG 2